# EUROPÄISCHE PATENTSCHRIFT

(11) **EP 3 291 714 B1**
(45) Veröffentlichungstag und Bekanntmachung des Hinweises auf die Patenterteilung: **29.05.2019**
(21) Anmeldenummer: 17740300.3
(22) Anmeldetag: 26.06.2017
(51) Int. Cl.: A47J 31/42, A47J 42/40

(54) **KAFFEEMASCHINE SOWIE BETRIEBSVERFAHREN**
COFFEE MACHINE AND OPERATING METHOD
MACHINE À CAFÉ ET SON PROCÉDÉ D'UTILISATION

(30) Priorität: 06.07.2016 DE 102016112393
(43) Veröffentlichungstag der Anmeldung: 14.03.2018
(73) Patentinhaber: Eugster/Frismag AG, 8580 Amriswil (CH)
(72) Erfinder: FORRER, Fritz, 9100 Herisau (CH); EBERLE, Rainer, 9000 St. Gallen (CH)
(74) Vertreter: Behrmann, Niels
(86) Internationale Anmeldenummer: PCT/EP2017/065643
(87) Internationale Veröffentlichungsnummer: WO 2018/007180

(56) Entgegenhaltungen:
- US-A- 4 659 023
- US-A1- 2012 240 777

## Beschreibung

Die Erfindung betrifft eine Kaffeemaschine gemäß dem Oberbegriff des Anspruchs 1, insbesondere einen Kaffeevollautomat, mit einer (integralen) Kaffeemühle zum Mahlen von Kaffeebohnen zu Kaffeemehl und mit einer Brüheinheit zum Brühen eines Kaffeegetränks durch Auslaugen des mittels der Kaffeemühle erzeugten Kaffeemehls mit Wasser, wobei das mittels der Kaffeemühle produzierte Kaffeemehl, insbesondere über einen (Zuleit-)Kanal, der Brühkammer der Brüheinheit, ganz besonders bevorzugt einem Brühzylinder, zuleitbar ist, wobei zwischen der Kaffeemühle und der Brühkammer eine Staueinrichtung angeordnet ist, umfassend ein mittels eines, insbesondere elektromotorischen, über eine Steuereinheit ansteuerbaren Antriebs zwischen einer Stauposition zum Aufstauen von Kaffeemehl in einem Stauraum vor einer Abgabe in die Brühkammer und einer Freigabeposition zur Abgabe des angestauten, insbesondere kompaktierten Kaffeemehls in den Kaffeemehlkanal verstellbares Stauelement.

Bevorzugt befinden sich ein Mahlwerk der Kaffeemühle und die Brüheinheit in einem gemeinsamen Kaffeemaschinengehäuse. Die Kaffeemaschine umfasst bevorzugt eine Heizeinrichtung zum Aufheizen von Wasser, beispielsweise aus einem integralen Wassertank und/oder einem Festwasseranschluss auf eine Brühtemperatur, von vorzugsweise über 80° C noch weiter bevorzugt über 90°C.

Ferner betrifft die Erfindung ein Verfahren zum Betreiben einer derartigen Kaffeemaschine gemäß dem Oberbegriff des Anspruchs 10, wobei Kaffeemehl mittels des Stauelementes in seiner Stauposition in dem Stauraum angestaut, bevorzugt kompaktiert wird und daraufhin, insbesondere nach Ablauf einer vorgegebenen oder auf Basis mindestens eines Betriebsparameters der Kaffeemaschine von der Steuereinheit bestimmten Zeitspanne nach Beginn eines Mahlvorgangs das Stauelement in seine Freigabeposition verstellt wird und das zuvor angestaute Kaffeemehl, insbesondere über einen Kanal, in die Brühkammer der Brüheinheit gelangt und in dieser durch Zugabe von Wasser mittels des Kaffeemehls ein Kaffeeprodukt gebrüht wird.

Bei Kaffeemaschinen mit integrierter Kaffeemühle besteht das Problem, dass insbesondere zu Beginn eines Mahlvorgangs und am Ende eines Mahlvorgangs, d.h. hauptsächlich dann, wenn ein Kaffeemehlfluss in Richtung Brühkammer noch nicht voll ausgebildet ist, Kaffeemehl die Kaffeemühle mit hoher kinetischer Energie verlässt und unkontrolliert den der Kaffeemühle nachgeordneten Kaffeemehlkanal zur Brüheinheit beaufschlagt bzw. verunreinigt. Dieser Effekt wird dann noch unterstützt durch die auftretende elektrostatische Aufladung des Kaffeemehls, die dazu führt, dass das Kaffeemehl dauerhaft in unzugänglichen Positionen des Kaffeemehlkanals und/oder an sonstigen Maschinenteilen anhaften bleibt. Durch in der Praxis auftretenden Feuchtigkeitseintrag durch den Kaffeebrühprozess kann dies dann Grundlage für eine biologische Belastung sein.

Aus der US 2012/240777 A1 ist eine Kaffeemaschine bekannt, umfassend eine mittels eines Antriebs zwischen einer Stauposition zum Aufstauen von Kaffeemehl in einem Stauraum vor einer Abgabe in die Brühkammer und einer Freigabeposition zur Abgabe des angestauten Kaffeemehls in die Brühkammer aufweisende Staueinrichtung.

Auch die US 4,659,023 A1 zeigt eine Kaffeemaschine mit Staueinrichtung.

Ausgehend von dem vorgenannten Stand der Technik liegt der Erfindung daher die Aufgabe zugrunde, eine aus hygienischer Sicht verbesserte Kaffeemaschine anzugeben, mit der eine unerwünschte Kontamination von Maschinenkomponenten mit Kaffeemehl reduziert wird. Ferner besteht die Aufgabe darin, ein Verfahren zum Betreiben einer solchen Kaffeemaschine anzugeben.

Diese Aufgabe wird hinsichtlich der Kaffeemaschine mit den Merkmalen des Anspruchs 1 gelöst.

Hinsichtlich des Verfahrens wird die Aufgabe mit den Merkmalen des Anspruchs 10 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, der Kaffeemühle, genauer deren Mahlwerk in Förderrichtung des Kaffeemehls eine aktive Staueinrichtung nachzuordnen, mit welcher Kaffeemehl in einen in Förderrichtung des Kaffeemehls vor einem ein- oder mehrteiligen Stauelement der Staueinrichtung angeordneten Stauraum anstaubar und bevorzugt dadurch kompaktierbar ist. Hierdurch kann Kaffeemehl kontrolliert, insbesondere in durch den Anstaueffekt kompaktierter Form in Richtung einer der Staueinrichtung nachgeordneten Brühkammer, insbesondere Brühzylinder, der Brüheinheit abgegeben werden. Bevorzugt erfolgt die Abgabe des Kaffeemehls aus dem Stauraum in einen Zuführ- bzw. Verbindungskanal zur Brühkammer, wobei der Kanal bevorzugt als Fall- und/oder Rutschkanal für Kaffeemehl ausgebildet ist. Das Stauelement der Staueinrichtung ist mittels eines Antriebs, insbesondere eines Elektromotors verstellbar, um das Anstauen und Abgeben exakt und aktiv steuern zu können. Zu diesem Zweck ist das Stauelement mittels des Antriebs zwischen mindestens einer Stauposition und mindestens einer Freigabeposition verstellbar, wobei das Stauelement in der Stauposition eine Auslassöffnung des Stauraums zumindest teilweise sperrt, jedenfalls so begrenzt, dass Kaffeemehl im Stauraum angestaut wird, während in der Freigabeposition der Öffnungsquerschnitt der Auslassöffnung vergrößert ist und Kaffeemehl aus dem Stauraum zur Brühkammer gelangen kann. Die erfindungsgemäße Kaffeemaschine wird dabei bevorzugt so betrieben, dass sich das Stauelement in mindestens einer kritischen Mahlphase, insbesondere während einer Anfangszeitspanne und/oder einer Endzeitspanne eines (desselben) Mahlvorgangs in einer Stauposition befindet und somit ein unkontrolliertes Eintreten von Kaffeemehl in den Kaffeemehlkanal verhindert. Wie eingangs erläutert, sind insbesondere diese Grenzphasen eines Mahlvorgangs kritisch, da in diesen der Kaffeemehlstrom noch nicht bzw. nicht mehr voll ausgebildet ist, wodurch Kaffeemehl mit hoher kinetischer Energie die Kaffeemühle, genauer deren Mahlwerk verlässt. Die Stauklappe verhindert in ihrer Stauposition nun ein unkontrolliertes Hineinspritzen von Kaffeemehlpartikeln in dem Stauelement in Förderrichtung nachgeordnete Funktionseinheiten, beispielsweise dem vorerwähnten Zuführkanal zur Brühkammer und trägt dafür Sorge, dass Kaffeemehl zunächst vor einer kontrollierten Abgabe hin zur Brühkammer angestaut ist, insbesondere nach einer vorgegebenen oder anhand eines Betriebsparameters, beispielsweise einer Umdrehungsanzahl des Mahlwerks bestimmten Zeitspanne. Nachdem ausreichend Kaffeemehl im Stauraum vorhanden, d.h. angestaut ist/wurde, wird die Stauklappe verstellt, so dass die Auslassöffnung des Stauraums freigegeben oder weiter freigegeben wird und angestautes Kaffeemehl in die Brühkammer gelangt. Durch das Anstauen des Kaffeemehls kommt es zu einer gewissen Kompaktierung - dies bedeutet, dass nicht oder nicht nur Einzelpartikel weitergefördert werden, sondern ein Kaffeemehlpartikelkonglomerat, was den zusätzlichen Vorteil einer geringeren statischen Aufladung mit sich bringt, wodurch eine Verschmutzungsneigung weiter reduziert wird.

Bei dem Stauraum handelt es sich nicht um eine Vorratskammer zur Bevorratung mehrerer Kaffeemehlportionen für eine Mehrzahl von Brühvorgängen. Bevorzugt ist der Stauraum so dimensioniert, dass dessen Volumen nicht ausreicht, das Kaffeemehl eines vollständigen Mahlvorgangs aufzunehmen. Bevorzugt ist das Stauraumvolumen maximal halb so groß, bevorzugt maximal ein drittel so groß wie ein nicht gepresstes, d.h. lockeres Kaffeemehlvolumen für einen Brühvorgang bzw. eines Mahlvorgangs. Typischerweise ist die Kaffeemaschine derart eingerichtet, dass die Kaffeemühle jeweils immer nur eine Kaffeemehlportion für den aktuellen Brühvorgang mahlt. Bevorzugt wird der Stauraum vor dem nächsten Mahlvorgang, insbesondere im Wesentlichen vollständig, geleert, entweder durch ein entsprechendes Verstellen des Stauelementes in seine Freigabeposition und/oder wie später noch erläutert werden wird durch aktives Austragen eines Kaffeemehlrestes mittels des Stauelementes aus dem Stauraum.

Ganz besonders bevorzugt ist eine Ausführungsform der Kaffeemaschine sowie des Betriebsverfahrens, bei der während eines (einzigen bzw. gemeinsamen) Mahlvorgangs das Stauelement mehrfach, insbesondere mehr als zweimal zwischen seiner Freigabeposition und seiner Stauposition verstellt wird, um mehrfach Kaffeemehl anstauen und dann, bevorzugt durch den Stauvorgang kompaktiert, in Richtung Brüheinheit, bevorzugt in den vorerwähnten Zuführkanal abgeben zu können. Die Steuereinheit ist die Staueinrichtung entsprechend ansteuernd ausgebildet.

Wie erwähnt nimmt das Stauelement in seiner Stauposition eine Relativposition zur Stauraumauslassöffnung ein, die ein Anstauen von Kaffeemehl in dem Stauraum ermöglicht und gleichzeitig den im Stand der Technik auftretenden Effekt eines unkontrollierten Hereinspritzens von Kaffeemehl in nachfolgende Maschinenkomponenten, insbesondere einen Zuführkanal zur Brühkammer zumindest reduziert, bevorzugt verhindert. Bevorzugt ist die vorerwähnte Stauraumauslassöffnung in der Stauposition des Stauelementes geschlossen. In der Freigabeposition ist die Stauraumauslassöffnung jedenfalls zu einem höheren Grad geöffnet als in der Stauposition, so dass kein Kaffeemehl mehr im Stauraum angestaut wird oder zumindest pro Zeiteinheit weniger als bei in der Stauposition befindlichem Stauelement. Allgemein ausgedrückt wird durch Verstellen des Stauelementes ein freier Öffnungsquerschnitt der Stauraumauslassöffnung variiert.

Ganz besonders bevorzugt ist eine Ausführungsform, bei der das Stauelement derart ausgebildet und angeordnet ist, dass mit diesem nicht nur der Öffnungsquerschnitt der Stauraumauslassöffnung veränderbar ist, sondern dass mittels des Stauelementes durch eine entsprechende Verstellung mittels des Antriebs, insbesondere am Ende eines Mahlvorgangs oder nach Abschluss eines Mahlvorgangs, d.h. nach einem Leermahlen des Mahlwerks noch in dem Stauraum befindliches Kaffeemehl aktiv austragbar ist, insbesondere indem mittels des Stauelementes im Stauraum noch verbliebendes Kaffeemehl aus diesem mittels des Stauelementes herausgeschoben, d.h. aktiv kraftbeaufschlagt wird. Eine solche Ausführungsform ist insbesondere dann von Vorteil, wenn die Kaffeemaschine mehrere Kaffeebohnenfächer zur Aufnahme unterschiedlicher Kaffeebohnensorten aufweist - durch das aktive Leerräumen des Stauraums wird eine Vermischung unterschiedlicher Kaffeesorten weitgehend verhindert. Konstruktiv besonders vorteilhaft und robust sowie wenig verschmutzungsanfällig ist eine Kaffeemaschine, bei der erfindungsgemäß das Stauelement als Stauklappe ausgebildet ist oder eine solche umfasst, die mittels des Antriebs um eine (Schwenk-)achse relativ zu der Stauraumauslassöffnung verschwenkbar ist, insbesondere zwischen mindestens einer Freigabe und mindestens einer Öffnungsposition und ganz besonders bevorzugt auch, wie erwähnt, derart, dass die Stauklappe als eine Art Räumschild genutzt wird, um aktiv den Stauraum zu entleeren.

Im Hinblick auf die Realisierung sowohl der Öffnungs- und Schließfunktion in bezug auf die Stauauslassöffnung als auch die Realisierung von aktiven Austragsmitteln zum Austragen von Kaffeemehl mittels des Stauelementes hat es sich als besonders vorteilhaft herausgestellt, dass die Stauklappe erfindungsgemäß zwei, bevorzugt winklig, insbesondere rechtwinklig, zueinander angeordnete und/oder sich auf unterschiedlichen Seiten einer Klappendrehachse befindliche Klappenteile (Klappenabschnitte) umfasst, nämlich ein erstes Klappenteil zum zumindest teilweisen, bevorzugt vollständigen Versperren der Stauraumauslassöffnung in der Stauposition und ein zweites Klappenteil zum aktiven Austragen, d.h. Kraftbeaufschlagen von Kaffeemehl aus dem Stauraum. Bevorzugt sind die beiden Klappenteile bzw. -abschnitte nicht relativ zueinander verstellbar, sondern starr relativ zueinander positioniert, insbesondere indem diese monolithisch ausgebildet sind, beispielsweise als Kunststoffspritzgussteil, ganz besonders bevorzugt in Form eines Winkelelementes.

Grundsätzlich ist es möglich, sowohl die Querschnittsveränderungsfunktion als auch die aktive Austragsposition mit einer einfachen Klappe zu realisieren, insbesondere indem diese um 360° mittels des Antriebs rotierbar ist - die Ausführungsform mit zwei winklig zueinander angeordneten Klappenabschnitten hat sich jedoch als vorteilhaft herausgestellt, da hierdurch ein Hineinverschwenken der Außenseite des ersten Klappenteils in den Stauraum verhindert werden kann, da diese Außenseite mit Kondensat vom Brühvorgang beaufschlagt sein kann - auf diese Weise wird ein Feuchtigkeitseintrag in den Stauraum vermieden. Darüber hinaus muss eine so ausgebildete Mehrteilklappe nicht um 360° rotierbar angeordnet werden sondern die unterschiedlichen Stellungen können durch eine Hin- und Herbewegung über einen vorgegebenen Schwenkwinkel, von vorzugsweise weniger als 180° bewirkt werden. Hierdurch wird wiederum der benötigte Bauraum reduziert.

Ganz besonders bevorzugt ist eine Ausführungsform, bei der der zweite Klappenteil sich in der Freigabeposition und/oder der Stauposition der Klappe innerhalb des Stauraums, insbesondere oberhalb eines Stauvolumens von Kaffeemehl befindet, so dass durch Überschwenken der Klappe über ihre Freigabeposition heraus ein solches Stauvolumen mittels der zweiten, nachschwenkenden Klappe aktiv austragbar ist.

Ganz besonders bevorzugt ist eine Ausführungsform der Kaffeemaschine, bei der die Steuereinheit den Antrieb für das Stauelement derart ansteuernd ausgebildet ist, dass diese das Stauelement, insbesondere erst, nach einer Zeitspanne nach Beginn und während eines (desselben) Mahlvorgangs aus der Stauposition in die Freigabeposition verstellt, insbesondere verschwenkt. Mit anderen Worten ist es bevorzugt, wenn das Stauelement während einer Zeitspanne zu Beginn eines Mahlvorgangs die Stauraumauslassöffnung so verschließt, dass aus der Kaffeemühle in den Stauraum gelangendes Kaffeemehl zunächst dort verbleibt, d.h. angestaut wird, bevor dann der Weg in Richtung Brühkammer durch Verstellen des Stauelementes in eine Freigabeposition freigegeben wird. Die Zeitspanne kann vorgegeben sein, d.h. fest in der Steuerung, beispielsweise softwaremäßig hinterlegt sein oder alternativ in Abhängigkeit mindestens eines Betriebsparameters bestimmt sein, d.h. sich in Abhängigkeit dieses Parameters ergeben - so ist es beispielsweise möglich, die Anzahl der Umdrehungen des Mahlwerks über eine geeignete Sensorik zu erfassen und mittels der Steuereinheit zu zählen und nach einer vorgegebenen Umdrehungsanzahl, die wiederum abhängig sein kann von der Kaffeebohnensorte den Antrieb, etc. zum Verstellen des Stauelementes anzusteuern.

Ganz besonders bevorzugt ist eine Ausführungsform der Kaffeemaschine, bei der die Steuereinheit den Antrieb derart ansteuernd ausgebildet ist, dass dieser nachdem das Stauelement bereits mindestens einmal aus einer Stauposition in eine Freigabeposition verstellt wurde wieder zurück in eine, insbesondere die vorherige Stauposition verstellt, bzw. zurückverstellt wird, um erneut Kaffeemehl anzustauen, welches dann nach einer erneuten Verstellung des Stauelementes in eine Freigabeposition wieder in Richtung Brüheinheit abströmen und/oder abtransportiert werden kann. Bevorzugt ist der Zeitpunkt zum erneuten Anstauen von Kaffeemehl so gewählt, dass das erneute Anstauen während des letzten Mahlabschnitts desselben Mahlvorgangs insbesondere dann erfolgt, wenn die letzten Bohnen vor einem Leerwerden des Mahlwerks gemahlen werden die Stauklappe geschlossen ist, um ein unkontrolliertes Herausspritzen von Kaffeemehl zu verhindern.

Ganz besonders bevorzugt ist eine Ausführungsvariante der Kaffeemaschine, bei der die Steuereinheit den Antrieb derart ansteuernd ausgebildet ist, dass dieser das Stauelement so verstellt, insbesondere verschwenkt, dass mit diesem, insbesondere nach Beenden eines (desselben) Mahlvorgangs und/oder zu einem Zeitpunkt vor Beendigung eines (desselben) Mahlvorgangs Kaffeemehl aus dem Stauraum aktiv austragbar, insbesondere ausschiebbar ist. Mit anderen Worten wird das Stauelement von dem Antrieb so verstellt, dass mit diesem in dem Stauraum befindliches Kaffeemehl aktiv kraftbeaufschlagt, d.h. aus dem Stauraum heraus befördert wird in Richtung Kaffeemehlkanal. Um ein gutes aktives Austragsergebnis zu erreichen hat es sich als besonders vorteilhaft herausgestellt, wenn die Kontur des Stauraums an die Schwenkbewegung der Klappe bzw. die von dieser beschriebenen Bewegungsachse angepasst ist. Hierzu hat der Stauraum bevorzugt in einer Schnittansicht eine teilkreisförmige Innenumfangskontur.

Als besonders vorteilhaft hat sich eine Ausführungsform der Kaffeemaschine herausgestellt, bei der sich der in der Stauposition von dem Stauelement in Richtung Kaffeemehlkanal verschließbare Stauraum hin in Förderrichtung zu dem Stauelement aufweitet oder entgegen der Förderrichtung betrachtet verjüngt. Besonders gute Ergebnisse im Hinblick auf eine geringe Verschmutzungsneigung und einen guten Anstaueffekt wurden dadurch erzielt, dass die Aufweitung bzw. Volumenvergrößerung dadurch erreicht wird, dass eine entlang der Vertikalen obere und untere Stauraumwand winklig zueinander verlaufen bzw. dass deren Abstand in der Förderrichtung zunimmt, wobei es ganz besonders bevorzugt ist, wenn die sich winklig, insbesondere senkrecht hierzu erstreckenden Seitenwände entlang der Förderrichtung gleich beabstandet, insbesondere parallel ausgerichtet sind, oder dass eine etwaige Abstandsvergrößerung entlang der Förderrichtung absolut und/oder relativ zur Abstandsvergrößerung der oberen und unteren Stauraumwand geringer ist.

Als besonders vorteilhaft hat es sich herausgestellt, dass in einem Bereich in Förderrichtung des Kaffeemehls vor dem Stauelement eine Fingerschutzgeometrie zum Verhindern eines Eingreifens in ein Mahlwerk der Kaffeemühle angeordnet ist. Insbesondere handelt es sich hierbei um einen Fortsatz, der den Durchgang in Richtung Mahlwerk so verengt, insbesondere durch Hineinragen in den Stauraum oder einen Zwischenstauraum und Mahlwerk vorgesehenen Kanal, dass ein Nutzer mit einem Finger nicht durchgreifen kann.

Die Erfindung führt auch auf ein Verfahren zum Betreiben einer erfindungsgemäßen Kaffeemaschine. Erfindungsgemäß ist vorgesehen, dass Kaffeemehl mittels des Stauelementes in seiner Stauposition in dem Stauraum angestaut wird und daraufhin, insbesondere nach Ablauf einer Zeitspanne nach Beginn eines Mahlvorgangs, insbesondere noch während des Mahlvorgangs, das Stauelement in eine Freigabeposition verstellt wird und das zuvor angestaute Kaffeemehl auf diese Weise, insbesondere über einen Zuführkanal, in die Brüheinheit gelangt und in dieser durch Zugabe von, insbesondere erhitztem, Wasser mittels des Kaffeemehls ein Kaffeeprodukt gebrüht wird.

Besonders bevorzugt beträgt die Zeitspanne zu Beginn eines Mahlvorgangs, die das Stauelement in seiner Stauposition verharrt mindestens eine Sekunde, bevorzugt mindestens zwei Sekunden, weiter bevorzugt mindestens drei Sekunden, noch weiter bevorzugt mindestens vier Sekunden, ganz besonders bevorzugt mindestens fünf Sekunden.

In Weiterbildung der Erfindung ist mit Vorteil vorgesehen, dass das Stauelement, nachdem es bereits mindestens einmal aus seiner Stauposition in eine Freigabeposition verstellt wird, wieder zurück in eine Stauposition verstellt wird, um somit erneut Kaffeemehl im Stauraum anzustauen, welches dann nach einem wiederum erneuten Verstellen des Stauelementes in eine Freigabeposition wieder in die Brüheinheit gelangt zu dem dort bereits aus demselben Mahlvorgang vorhandenen Kaffeemehl. Bevorzugt erfolgt dieses erneute Anstauen am Ende eines Mahlvorgangs.

Erfindungsgemäß ist vorgesehen, dass das Stauelement, insbesondere nachdem das Mahlwerk leergemahlen wurde so verstellt wird, dass mit diesem aktiv Kaffeemehl aus dem Stauraum, also durch Kraftbeaufschlagung mittels des Stauelementes ausgetragen, insbesondere ausgeschoben wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis Fig. 4:: unterschiedliche Betriebszustände während der Herstellung eines Kaffeeproduktes mit einer Kaffeemaschine, und
- Fig. 5:: ein alternatives Ausführungsbeispiel einer Kaffeemaschine, wobei hintereinander unterschiedliche Betriebssituationen gezeigt sind, aus denen die bevorzugte Betriebsweise eines Staumahlens mit einem mehrfach alternierenden Öffnen und Schließen einer Stauraumauslassöffnung ersichtlich ist.

In den Figuren sind gleiche Elemente und Elemente mit der gleichen Funktion mit den gleichen Bezugszeichen gekennzeichnet.

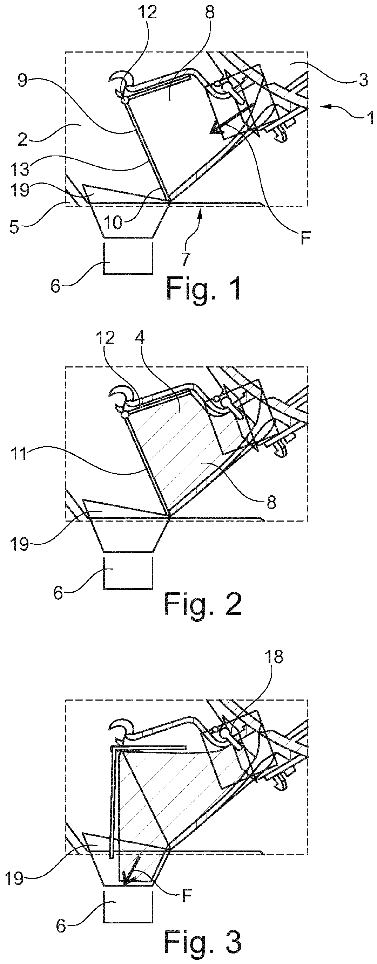

In den Figuren werden ausschnittsweise Komponenten einer als Kaffeevollautomat ausgebildeten Kaffeemaschine 1 gezeigt. Diese umfasst eine in einem Gehäuse 2 angeordnete Kaffeemühle 3 mit einem nicht gezeigten Mahlwerk zum Mahlen von Kaffeebohnen zu in Fig. 2 angedeuteten Kaffeemehlen 4. In demselben Gehäuse 2 befindet sich eine Brüheinheit 5 mit einer Brühkammer 6, in der durch Einleiten von heißem Wasser aus dem mittels der Kaffeemühle 3 gemahlenem Kaffeemehl 4 ein Kaffeeprodukt brühbar ist.

In einem Bereich zwischen der Kaffeemühle 3 und der Brüheinheit 5 befindet sich ein (Zuführ-)Kanal 19, über welchen das mittels der Kaffeemühle 3 erzeugte Kaffeemehl schwerkraftbedingt in die Brühkammer, insbesondere einen Brühzylinder der Brüheinheit 5 gelangen, insbesondere fallen und/oder rutschen kann.

In einer Förderrichtung F für Kaffeemehl 4 befindet sich zwischen der Kaffeemühle 3 und der Brühkammer 6 (in Förderrichtung vor dem Kanal 19) eine Staueinrichtung 7 zum Anstauen von Kaffeemehl 4. Die Staueinrichtung 7 umfasst einen Stauraum 8, in dem Kaffeemehl 4 mittels eines als Stauklappe ausgebildeten Stauelementes 9 anstaubar, d.h. von der Brühkammer 6 bzw. dem Kanal 19 zeitweise zurückhaltbar ist. Das Stauelement 9 ist mittels eines nicht gezeigten Antriebs, hier beispielhaft bevorzugt in Form eines Elektromotors verstellbar, in dem konkreten Ausführungsbeispiel um eine Achse A rotierbar zwischen einer in Fig. 1 gezeigten Stauposition, in der das Stauelement 9 eine Stauraumauslassöffnung 10 verschließt und einer in Fig. 3 gezeigten Freigabeposition, in der das Stauelement 9 die Stauraumauslassöffnung 10 freigibt, so dass Kaffeemehl 4 in der Förderrichtung F aus dem Stauraum 8 in die Brühkammer 6 gelangen, hier rutschen und fallen kann.

Aus den Figuren ergibt sich, dass das Stauelement 9 als Stauklappe, konkret als Doppelklappe ausgebildet ist, die zwei winklig hier beispielhaft rechtwinklig zueinander angeordnete, auf unterschiedlichen Seiten einer Klappendrehachse angeordneten Klappenteile (Klappenabschnitte) aufweist, die in dem konkreten Ausführungsbeispiel monolithisch ausgebildet und daher winkelunveränderlich zueinander angeordnet sind. Bei einer entsprechenden Ansteuerung des Antriebs werden somit automatisch beide Klappenteile verstellt.

Konkret umfasst das Stauelement 9 ein erstes Klappenteil 11, welches die Aufgabe hat die Stauraumauslassöffnung 10 zu öffnen und zu schließen, d.h. zwischen einer Freigabeposition und einer Stauposition verstellt zu werden. Ferner umfasst das als Doppelklappe ausgebildete Stauelement 9 ein zweites Klappenteil 12, welches sich in der in Fig. 2 gezeigten Stauposition in einem oberen Bereich des Stauraums 8 befindet und insbesondere oberhalb von angestautem Kaffeemehl 4. Auf diese Weise ist es möglich durch Verschwenken des Stauelementes 9 über die in Fig. 3 gezeigte Freigabeposition hinaus mittels des Stauelementes 9, konkret mittels des zweiten Klappenteils 12 Kaffeemehl 4 aktiv durch Herausschieben aus dem Stauraum 8 in Richtung Brühkammer 6 auszutragen und somit den Stauraum 8 im wesentlichen restlos zu entleeren, um dann wiederum bei einem nächsten Mahlvorgang dieselbe Kaffeebohnensorte oder bevorzugt eine andere Kaffeebohnensorte mahlen zu können - jedenfalls wird eine Durchmischung mit dem Kaffeemehl 4 eines vorhergehenden Mahlvorgangs sowie eine Restbildung sicher vermieden.

Im Folgenden wird die Funktionsweise der erfindungsgemäßen Kaffeemaschine bzw. eines bevorzugten Programmablaufs beschrieben.

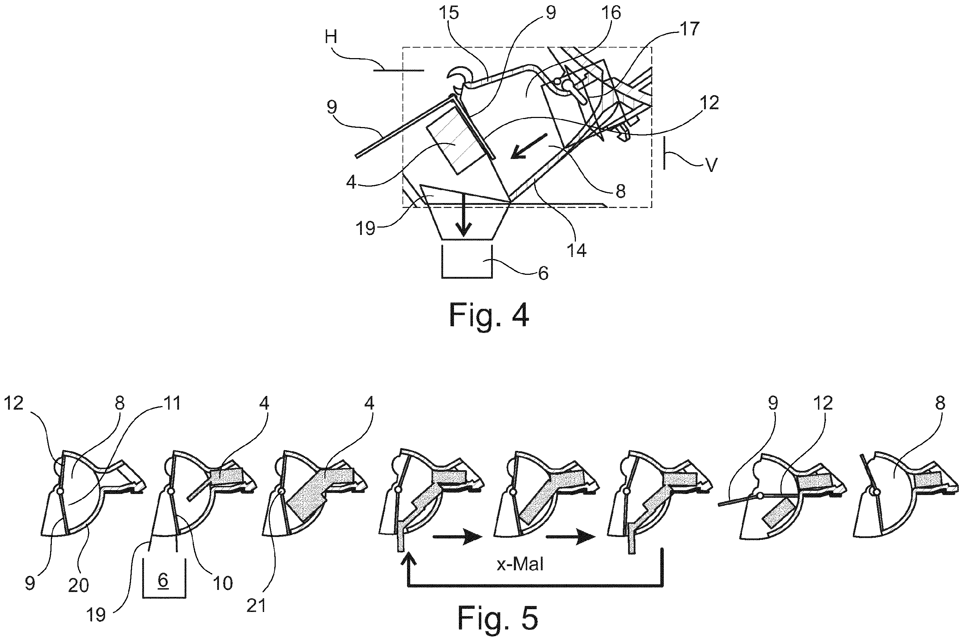

In Fig. 1 ist die Situation beim Start eines Mahlvorgangs gezeigt. Zu erkennen ist, dass sich das Stauelement 9 in seiner Stauposition befindet und, in dem konkreten Ausführungsbeispiel mit dem ersten Klappenteil 11 die Stauraumauslassöffnung 10 versperrt. Zu Beginn des Mahlvorgangs spritzen nun Kaffeemehlpartikel von der Staurauminnenseite her gegen das Stauelement 9 und ein Herausspritzen aus dem Stauraum 8 wird sicher vermieden. Das Kaffeemehl 4 wird angestaut. Der Stauraum 8 bleibt mittels des Stauelementes 9 eine gewisse, insbesondere vorgegebene Zeitlang verschlossen, insbesondere bis sich ein in Fig. 2 gezeigter Zustand einstellt, bei dem eine gewünschte Menge von Kaffeemehl 4 in den Stauraum 8 angestaut wurde - die Kaffeemühle 3 mahlt während dessen die ganze Zeit weiter. Nun wird die Stauklappe mittels des Antriebs verstellt in eine in Fig. 4 gezeigte Freigabeposition, so dass das durch das Anstauen etwas kompaktierte Kaffeemehl 4 in den Kanal 19 bzw. die Brühkammer 6 gelangen kann. Nicht gezeigt ist nun eine weitere bevorzugte Ausführungsform, bei der das Stauelement 9 erneut zurück in eine Stauposition verstellt wird, um, insbesondere kurz vor Ende desselben Mahlvorgangs die Stauraumauslassöffnung 10 nochmals zu verschießen und um erneut Kaffeemehl 4 anzustauen. Nachdem das Mahlwerk leergemahlen wurde, erfolgt dann der in Fig. 4 gezeigte aktive Ausräum- bzw. Reinigungsschritt, bei der das Stauelement 9 über die Freigabeposition hinausverschwenkt wird, so dass kompaktiertes Kaffeemehl 4 mittels des Stauelementes 9, hier beispielhaft des zweiten Klappenteils 12 kraftbeaufschlagt und aus dem Stauraum 8 herausgeschoben wird. Danach wird der Stauraum 8 wieder geschlossen - d.h. die in Fig. 1 gezeigte Position wird angefahren, wodurch das Stauelement 9 dann wiederum auch einen Feuchtigkeitseintritt in den Stauraum 8 verhindert. Zu erkennen ist, dass eine Außenseite 13 des ersten Klappenteils 11 dauerhaft außerhalb des Stauraums 8 verbleibt, so dass ein Feuchtigkeitseintrag von sich an der Außenseite 13 bildendem Kondensat in den Stauraum 8 sicher vermieden wird.

Aus den Figuren ist ersichtlich, dass der Stauraum 8 von vier in Umfangsrichtung nebeneinander angeordneten Stauraumwänden begrenzt wird, nämlich einer entlang einer Vertikalen V unteren Stauraumwand 14, einer oberen Stauraumwand 15 sowie zwei rechtwinklig dazu angeordneten Stauraumseitenwänden, von denen in den geschnittenen Darstellungen nur eine mit dem Bezugszeichen 16 gekennzeichnete Stauraumwand gezeigt ist. In der Zeichnungsebene oberhalb dieser Stauraumwand 16 befindet sich eine weitere, zu der seitlichen Stauraumwand 16 parallele Stauraumwand. Zu erkennen ist, dass sich der Stauraum 8 in der Förderrichtung F aufweitet, indem nämlich die untere und die obere Stauraumwand 14, 15 einen sich in der Förderrichtung F öffnenden Winkel einschließen, während sich der Abstand der rechtwinklig zur oberen und unteren Stauraumwand 14, 15 angeordneten Stauraumwände 16 im Wesentlichen nicht verändert. Durch diese Maßnahmen wird ein guter Entleerungsgrad des Stauraums gewährleistet. Zu erkennen ist ferner, dass sowohl die obere als auch die untere Stauraumwand 14, 15 zur Horizontalen H geneigt angeordnet sind, also auch zur Vertikalen V.

Ferner ist aus den Figuren zu entnehmen, dass in einem Übergangsbereich 17 (Verbindungskanal) zwischen dem Stauraum 8 und dem Mahlwerk der Kaffeemühle 3 eine Fingerschutzgeometrie 18 angeordnet ist, die ein Hindurchgreifen durch den Übergangsbereich 17 aus dem Stauraum 8 in den Mahlraum sicher verhindert.

In Fig. 5 ist ein alternatives Ausführungsbeispiel einer Kaffeemaschine gezeigt, wobei zur Vermeidung von Wiederholungen insbesondere auf Unterschiede zu dem vorangehend erläuterten Ausführungsbeispiel eingegangen wird. Im Hinblick auf die Gemeinsamkeiten wird auf die vorstehende Figurenbeschreibung nebst Figuren verwiesen.

Der auffälligste Unterschied besteht in der unterschiedlichen Konturierung des Stauraums bzw. einer Staurauminnenwandung 20. Diese ist in dem gezeigten Ausführungsbeispiel in einer Schnittansicht teilkreisförmig, d.h. kreissegmentförmig konturiert und damit an die Schwenk- bzw. Rotationsbewegung des als Doppelklappe ausgebildeten Stauelementes angepasst. Das Stauelement umfasst bei dem in Fig. 5 gezeigten Ausführungsbeispiel ein erstes und ein zweites Klappenteil 11, 12, deren Funktion der Klappenteile des vorstehend erläuterten Ausführungsbeispiels entspricht - aufgrund der Anpassung der Stauraumkontur an die Schwenk- bzw. Rotationsbewegung der Klappe wird eine im Wesentlichen vollständige Entleerung mittels des zweiten Klappenteils 12 ermöglicht. Ein wesentlicher Unterschied bei dem Ausführungsbeispiel gemäß Fig. 5. besteht in dem größeren Winkel der Klappenteile 11, 12 zueinander - grundsätzlich denkbar ist auch eine 180°-Anordnung zueinander - ebenso wie bei dem vorhergehenden Ausführungsbeispiel befinden sich die Klappenteile 11, 12 jedoch auf unterschiedlichen Seiten einer (gemeinsamen) Klappendrehachse 21.

Im Folgenden werden die dargstellten Betriebszustände von links nach rechts erläutert. Im ersten Bild von Fig. 5 ist der Stauraum 8 noch leer - der Mahlvorgang hat gerade begonnen. Im zweiten Bild füllt sich der Stauraum langsam. Im dritten Bild ist zu erkennen, dass sich aufgrund des Verschlusses der Stauraumauslassöffnung 10 über das erste Klappenteil 11 des Stauelementes 9 Kaffeemehl 4 anstaut und somit vor dem Auslass in Richtung Brühkammer 6 zurückgehalten wird. In Bild 4 ist gezeigt, dass das Stauelement von seiner vorhergehenden Stauposition in einer Freigabeposition verstellt und somit die Stauraumauslassöffnung 10 geöffnet wurde. Im fünften Bild wurde das Stauelement 9 in seiner Stauposition zurückverstellt und es wird erneut angestaut während dann im darauffolgenden sechsten Bild die Stauraumauslassöffnung 10 durch Verstellen des Stauelementes 9 in seine Freigabeposition wieder geöffnet wird. Dieser Vorgang wird x-mal wiederholt, also mindestens zweimal, bevorzugt mehr als zweimal während eines einzigen, d.h. gemeinsamen Mahlvorgangs für einen (einzigen) Brühvorgang.

Im darauffolgenden siebten Bild ist zu erkennen, dass mittels des Stauelementes 9, konkret des zweiten Klappenteils 12 der Stauraum 8 nach der Beendigung des Mahlvorgangs aktiv leergeräumt wird.

### Bezugszeichen

- 1: Kaffeemaschine
- 2: Gehäuse
- 3: Kaffeemühle
- 4: Kaffeemehl
- 5: Brüheinheit
- 6: Brühkammer
- 7: Staueinrichtung
- 8: Stauraum
- 9: Stauelement
- 10: Stauraumauslassöffnung
- 11: erstes Klappenteil
- 12: zweites Klappenteil
- 13: Außenseite
- 14: untere Stauraumwand
- 15: obere Stauraumwand
- 16: Stauraumseitenwand
- 17: Übergangsbereich
- 18: Fingerschutzgeometrie
- 19: Kanal
- 20: Staurauminnenwandung
- 21: Klappendrehachse

- A: Achse
- F: Förderrichtung des Kaffeemehls
- H: Horizontale
- V: Vertikale

## Patentansprüche

1. Kaffeemaschine (1), insbesondere Kaffeevollautomat, mit einer Kaffeemühle (3) zum Mahlen von Kaffeebohnen zu Kaffeemehl (4) und mit einer eine Brühkammer (6) umfassenden Brüheinheit (5) zum Brühen eines Kaffeegetränkes durch Auslaugen des mittels der Kaffeemühle (3) erzeugten Kaffeemehls (4) mit Wasser, wobei zwischen der Kaffeemühle (3) und der Brühkammer (6) eine ein mittels eines, insbesondere elektromotorischen, über eine Steuereinheit ansteuerbaren Antriebs zwischen einer Stauposition zum Aufstauen von Kaffeemehl (4) in einem Stauraum (8) vor einer Abgabe in die Brühkammer (6) und einer Freigabeposition zur Abgabe des angestauten Kaffeemehls (4) in die Brühkammer (6) verstellbares Stauelement (9) umfassende Staueinrichtung (7) angeordnet ist, und wobei das Stauelement (9) als mittels des Antriebs um eine Schwenkachse verschwenkbare Stauklappe ausgebildet ist oder eine solche umfasst,
**dadurch gekennzeichnet,**
**dass** die Stauklappe zwei, bevorzugt starr, weiter bevorzugt winklig zueinander angeordnete, Klappenteile (11, 12) umfasst, nämlich ein erstes, Klappenteil (11) zum Versperren der Stauraumauslassöffnung (10) des Stauraums (8) und ein zweites Klappenteil (12) zum aktiven Austragen von Kaffeemehl (4) aus dem Stauraum (8).

2. Kaffeemaschine nach Anspruch 1,
**dadurch gekennzeichnet,**
**dass** in der Stauposition eine Stauraumauslassöffnung (10) mittels des Stauelements (9) zumindest teilweises, bevorzugt vollständig zum Zurückhalten von Kaffeemehl (4) von der Brühkammer (6) geschlossen ist, und dass in der Freigabeposition die Stauraumauslassöffnung (10) zumindest teilweise, vorzugsweise vollständig geöffnet ist, so dass das Kaffeemehl (4) aus dem Stauraum (8) in die Brühkammer (6) und der Brüheinheit (5), insbesondere schwerkraftbedingt und/oder von mittels der Kaffeemühle (3) erzeugtem Kaffeemehl (4) angeschoben, gelangen kann.

3. Kaffeemaschine nach einem der Ansprüche 1 oder 2,
**dadurch gekennzeichnet,**
**dass** das Stauelement (9) mittels des Antriebs derart verstellbar ist, dass mittels des Stauelementes (9) in dem Stauraum (8) befindliches Kaffeemehl (4) in die Brühkammer (6), insbesondere durch Herausschieben, austragbar ist.

4. Kaffeemaschine nach einem der vorhergehenden Ansprüche,
**dadurch gekennzeichnet,**
**dass** eine von Stauraum (8) abgewandte Außenseite (13) des ersten Klappenteils (11) nicht mittels des Antriebs in den Stauraum (8) hinein verstellbar ist.

5. Kaffeemaschine nach einem der vorhergehenden Ansprüche,
**dadurch gekennzeichnet,**
**dass** die Steuereinheit den Antrieb derart ansteuernd ausgebildet ist, dass dieser das Stauelement (9) erst nach einer, insbesondere vorbestimmten oder in Abhängigkeit mindestens eines Betriebsparameters bestimmten, Zeitspanne nach Beginn eines Mahlvorgangs aus der Stauposition in die Freigabeposition verstellt, insbesondere verschwenkt.

6. Kaffeemaschine nach einem der vorhergehenden Ansprüche,
**dadurch gekennzeichnet,**
**dass** die Steuereinheit den Antrieb derart ansteuernd ausgebildet ist, dass dieser das Stauelement (9) während desselben Mahlvorgangs nach einem Verstellen, insbesondere Verschwenken, aus der Stauposition in die Freigabeposition und einem Abgeben von zuvor angestautem Kaffeemehl (4) aus dem Stauraum (8) in die Brühkammer (6) vor Beendigung des Mahlvorgangs wieder zurück in eine Stauposition verstellt und nach einer, insbesondere vorgegebenen oder auf Basis eines Betriebsparameters bestimmten, Zeitspanne erneut in eine Freigabeposition verstellt.

7. Kaffeemaschine nach einem der vorhergehenden Ansprüche,
**dadurch gekennzeichnet,**
**dass** die Steuereinheit den Antrieb derart ansteuernd ausgebildet ist, dass dieser das Stauelement (9) so verstellt, insbesondere verschwenkt, dass mit diesem, insbesondere nach Beenden des Mahlvorgangs und/oder zu einem Zeitpunkt vor Beendigung des Mahlvorgangs Kaffeemehl (4) aus dem Stauraum (8) aktiv austragbar, insbesondere ausschiebbar ist.

8. Kaffeemaschine nach einem der vorhergehenden Ansprüche,
**dadurch gekennzeichnet,**
**dass** sich der Stauraum (8) hin zu der Stauraumauslassöffnung (10) aufweitet, insbesondere derart, dass der Abstand zwischen einer oberen (15) und einer zur Horizontalen (H) nach unten geneigten unteren Stauraumwand (14) in einer Förderrichtung (F) des Kaffeemehls (4) zunimmt und der Abstand zwischen zwei einander gegenüberliegenden, winklig, insbesondere rechtwinklig zur oberen und unteren Stauraumwand (14) angeordneten Stauraumseitenwänden (16) hin zur Stauraumauslassöffnung (10) konstant bleibt oder sich zumindest absolut und/oder relativ weniger stark vergrößert als der Abstand zwischen der oberen (15) und der unteren (14) Stauraumwand.

9. Kaffeemaschine nach einem der vorhergehenden Ansprüche,
**dadurch gekennzeichnet,**
**dass** in einem Bereich in Förderrichtung des Kaffeemehls (4) vor dem Stauelement (9) eine Fingerschutzgeometrie (18) zum Verhindern eines Eingreifens in ein Mahlwerk der Kaffeemühle (3) angeordnet ist.

10. Verfahren zum Betreiben einer Kaffeemaschine (1), insbesondere Kaffeevollautomat, nach einem der vorhergehenden Ansprüche, wobei Kaffeemehl (4) mittels des Stauelementes (9) in seiner Stauposition in dem Stauraum (8) angestaut wird und daraufhin, insbesondere nach Ablauf einer Zeitspanne nach Beginn eines Mahlvorgangs das Stauelement (9) in die Freigabeposition verstellt wird und wobei zuvor angestaute Kaffeemehl (4) in die Brühkammer (6) gelangt und in dieser durch Zugabe von, insbesondere erhitztem Wasser, mittels des Kaffeemehls (4) ein Kaffeeprodukt gebrüht wird,
**dadurch gekennzeichnet,**
**dass** das Stauelement (9) so verstellt wird, dass mit diesem, insbesondere nach Beenden des Mahlvorgangs und/oder zu einem Zeitpunkt vor Beenden des Mahlvorgangs Kaffeemehl (4) aus dem Stauraum (8) aktiv ausgetragen, insbesondere ausgeschoben wird.

11. Verfahren nach Anspruch 10,
**dadurch gekennzeichnet,**
**dass** die Zeitspanne mindestens 1s, bevorzugt mindestens 2s, weiter bevorzugt mindestens 3s, noch weiter bevorzugt mindestens 4s, ganz besonders bevorzugt mindestens 5s beträgt.

12. Verfahren nach einem der Ansprüche 10 oder 11,
**dadurch gekennzeichnet,**
**dass** das Stauelement (9) während desselben Mahlvorgangs nach einem Verstellen, insbesondere Verschwenken, aus der Stauposition in die Freigabeposition und einem Abgeben von zuvor angestautem Kaffeemehl (4) aus dem Stauraum (8) in die Brühkammer (6) vor Beendigung des Mahlvorgangs wieder zurück in eine Stauposition verstellt und einer, insbesondere vorgegebenen oder auf Basis eines Betriebsparameters ermittelten, Zeitspanne erneut in eine Freigabeposition verstellt.

## Claims

1. A coffee machine (1), in particular a fully automatic coffee machine, having a coffee grinder (3) for grinding coffee beans into coffee grounds (4) and having a brewing unit (5) comprising a brewing chamber (6) for brewing a coffee beverage by leaching the coffee grounds (4) generated by the coffee grinder (3) with water, wherein a shutter device (7) is arranged between the coffee grinder (3) and the brewing chamber (6), said shutter device (7) comprising a shutter element (9) adjustable by a drive controllable by a control unit, in particular a control unit comprising an electric motor, said shutter element (9) being adjustable between a blocking position for accumulating coffee grounds (4) in a holding space (8) before delivering them into the brewing chamber (6) and a releasing position for delivering the accumulated coffee grounds (4) into the brewing chamber (6), and wherein said shutter element (9) is designed as a shutter flap rotatable about a rotational axis by the drive or said shutter element (9) comprises such a flap,
**characterized in that**
the shutter flap comprises two, preferably rigid, further preferably arranged to each other at an angle, flap parts (11, 12), namely a first flap part (11) for blocking the holding space outlet opening (10) of the holding space (8) and a second flap part (12) for actively discharging coffee grounds (4) from the holding space (8).

2. The coffee machine according to Claim 1,
**characterized in that**,
in the blocking position, a holding space outlet opening (10) is closed at least partially, preferably completely, by the shutter element (9) to retain coffee grounds (4) away from the brewing chamber (6), and that, in the releasing position, the holding space outlet opening (10) is at least partially, preferably completely, opened, such that the coffee grounds (4) can move from the holding space (8) into the brewing chamber (6) and brewing unit (5), in particular due to gravity and/or due to being pushed along by the coffee grounds (4) generated by the coffee grinder (3).

3. The coffee machine according to any of Claim 1 or 2,
**characterized in that**
the shutter element (9) is adjustable the drive in such a manner that coffee grounds (4) located in the holding space (8) can be discharged into the brewing chamber (6) by the shutter element (9), in particular by being pushed out.

4. The coffee machine according to any of the preceding claims,
**characterized in that**
an exterior side (13) of the first flap part (11), which faces away from the holding space (8), cannot be adjusted by the drive such that said side protrudes into the holding space (8).

5. The coffee machine according to any of the preceding claims,
**characterized in that**
the control unit is designed such that it controls the drive in such a manner that said drive adjusts, in particular rotates, the shutter element (9) from the blocking position into the releasing position only after a period of time after the start of the grinding process, in particular after a previously defined period of time or a period of time dependent on at least one operating parameter.

6. The coffee machine according to any of the preceding claims,
**characterized in that**
the control unit is designed such that it controls the drive in such a manner that said drive, during a single grinding process, after an adjustment of the shutter element (9) from the blocking position into the releasing position and a discharge of previously accumulated coffee grounds (4) from the holding space (8) into the brewing chamber (6), adjusts said shutter element (9) back to a blocking position prior to the end of the grinding process, and that said drive again adjusts said shutter element (9) to a releasing position after a period of time, in particular a previously defined period of time or a period of time determined based on an operating parameter.

7. The coffee machine according to any of the preceding claims,
**characterized in that**
the control unit is designed such that it controls the drive in such a manner that said drive adjusts, in particular rotates, the shutter element (9) in such a manner that it can actively discharge, in particular push out, coffee grounds (4) from the holding space (8), in particular discharge the same after the end of the grinding process and/or at a time before the end of the grinding process.

8. The coffee machine according to any of the preceding claims,
**characterized in that**
the holding space (8) expands towards the holding space outlet opening (10), in particular in such a manner that the distance between an upper holding space wall (15) and a lower holding space wall (14) tilted downward from the horizontal plane (H) increases in a conveying direction (F) of the coffee grounds (4), and that the distance between two opposing holding space side walls (16) arranged at an angle, in particular a right angle, to the upper and lower holding space wall (14) remains constant toward the holding space outlet opening (10) or that said distance at least increases to an absolutely and/or relatively lesser degree than does the distance between the upper (15) and the lower (14) holding space wall.

9. The coffee machine according to any of the preceding claims,
**characterized in that**
a finger guard device (18) for preventing any reaching into a grinding mechanism of the coffee grinder (3) is arranged in an area in front of the shutter element (9) as seen in the conveying direction of the coffee grounds (4).

10. A method for operating a coffee machine (1), in particular a fully automatic coffee machine, according to any one of the preceding claims, wherein coffee grounds (4) are accumulated in a holding space (8) by a shutter element (9) in its blocking position, and the shutter element (9) subsequently, in particular after a period of time following the start of the grinding process has expired, is adjusted to its releasing position, and wherein the previously accumulated coffee grounds (4) reach the brewing chamber (6) and a coffee product is brewed by adding water, in particular heated water, to the coffee grounds (4) in said brewing chamber (6),
**characterized in that**
the shutter element (9) is adjusted in such a manner that it is used to actively discharge, in particular to push out, coffee grounds (4) from the holding space (8), in particular after the end of the grinding process and/or at a time before the end of the grinding process.

11. The method according to Claim 10,
**characterized in that**
the period of time is at least 1 s, preferably at least 2 s, further preferred at least 3 s, even further preferred at least 4 s, especially preferred at least 5 s.

12. The method according to any one of Claim 10 or 11,
**characterized in that**
the shutter element (9), during a single grinding process, after an adjustment, in particular a rotation, from the blocking position into the releasing position and after a discharge of previously accumulated coffee grounds (4) from the holding space (8) into the brewing chamber (6), is adjusted back to a blocking position prior to the end of the grinding process, and that it is adjusted again to a releasing position after a period of time, in particular a previously defined period of time or a period of time determined based on an operating parameter.

## Revendications

1. Machine à café (1), notamment machine à café automatique, avec un moulin à café (3) pour moudre des grains de café en café moulu (4) et avec un groupe percolateur (5) comprenant une chambre de percolation (6) pour faire une boisson à base de café par lixiviation avec de l'eau du café moulu (4) produit au moyen du moulin à café (3), un dispositif de retenue (7) comprenant un élément de retenue (9) déplaçable au moyen d'un système d'entraînement notamment à moteur électrique, pouvant être commandé par une unité de commande entre une position de retenue pour accumuler du café moulu (4) dans un compartiment de retenue (8) avant une distribution dans la chambre de percolation (6) et une position de libération pour distribuer le café moulu (4) accumulé dans la chambre de percolation (6) étant disposé entre le moulin à café (3) et la chambre de percolation (6) et l'élément de retenue (9) étant constitué comme un clapet de retenue pivotable au moyen du système d'entraînement autour d'un axe de pivotement ou comprenant un élément analogue
**caractérisée en ce que**
le clapet de retenue comprend deux parties de clapet (11, 12) disposées de préférence rigides, davantage de préférence de façon angulaire l'une par rapport à l'autre, notamment une première partie de clapet (11) pour obturer l'ouverture de sortie de compartiment de retenue (10) du compartiment de retenue (8) et une deuxième partie de clapet (12) pour déverser activement du café moulu (4) du compartiment de retenue (8).

2. Machine à café selon la revendication 1,
**caractérisée en ce que**
dans la position de retenue, une ouverture de sortie de compartiment de retenue (10) est fermée au moyen de l'élément de retenue (9) au moins en partie, de préférence complètement pour retenir du café moulu (4) de la chambre de percolation (6) et **en ce que** dans la position de libération, l'ouverture de sortie de compartiment de retenue (10) est ouverte au moins en partie, de préférence complètement de telle sorte que le café moulu (4) peut parvenir du compartiment de retenue (8) dans la chambre de percolation (6) et dans le groupe percolateur (5), notamment poussé par gravité et/ou par le café moulu (4) produit au moyen du moulin à café (3).

3. Machine à café selon l'une quelconque des revendications 1 ou 2,
**caractérisée en ce que**
l'élément de retenue (9) peut être déplacé au moyen du système d'entraînement de telle façon qu'au moyen de l'élément de retenue (9) du café moulu (4) se trouvant dans le compartiment de retenue (8) peut être déversé, notamment par poussée, dans la chambre de percolation (6) .

4. Machine à café selon l'une quelconque des revendications précédentes,
**caractérisée en ce**
**qu'**un côté extérieur (13) opposé au compartiment de retenue (8) de la première partie de clapet (11) ne peut pas être déplacé vers l'intérieur dans le compartiment de retenue (8) au moyen du système d'entraînement.

5. Machine à café selon l'une quelconque des revendications précédentes,
**caractérisée en ce que**
l'unité de commande est constituée pilotant le système d'entraînement de telle façon que celui-ci ne déplace , notamment ne fait pivoter, l'élément de retenue (9) de la position de retenue à la position de libération qu'après une période de temps notamment prédéterminée ou déterminée en fonction d'au moins un paramètre de fonctionnement après le début d'une opération de broyage.

6. Machine à café selon l'une quelconque des revendications précédentes,
**caractérisée en ce que**
l'unité de commande est constituée pilotant le système d'entraînement de telle façon que celui-ci redéplace l'élément de retenue (9) pendant la même opération de broyage en arrière dans une position de retenue après un déplacement, notamment un pivotement, de la position de retenue à la position de libération et après une distribution de café moulu (4) préalablement accumulé du compartiment de retenue (8) dans la chambre de percolation (6) avant la fin de l'opération de broyage et déplace à nouveau celui-ci dans une position de libération après une période de temps notamment prédéfinie ou déterminée sur la base d'un paramètre de fonctionnement.

7. Machine à café selon l'une quelconque des revendications précédentes,
**caractérisée en ce que**
l'unité de commande est constituée pilotant le système d'entraînement de telle façon que celui-ci déplace, notamment fait pivoter, l'élément de retenue (9) de telle sorte qu'avec celui-ci du café moulu (4) peut être activement déversé , notamment expulsé du compartiment de retenue (8), notamment après la fin de l'opération de broyage et/ou à un moment avant la terminaison de l'opération de broyage.

8. Machine à café selon l'une quelconque des revendications précédentes,
**caractérisée en ce que**
le compartiment de retenue (8) s'élargit vers l'ouverture de sortie de compartiment de retenue (10), notamment de telle façon que la distance entre une paroi de compartiment de retenue (14) supérieure (15) et une paroi de compartiment de retenue (14) inférieure inclinée vers le bas par rapport à l'horizontale (H) augmente dans une direction de transport (F) du café moulu (4) et la distance entre deux parois latérales de compartiment de retenue (16) opposées l'une à l'autre, disposées de façon angulaire, notamment à angle droit par rapport à la paroi de compartiment de retenue (14) supérieure et inférieure reste constante vers l'ouverture de sortie de compartiment de retenue (10) ou s'agrandit au moins de façon absolue et/ou relativement moins fortement que la distance entre la paroi de compartiment de retenue supérieure (15) et inférieure (14).

9. Machine à café selon l'une quelconque des revendications précédentes,
**caractérisée en ce que**
dans une zone dans la direction de transport du café moulu (4), une géométrie de protection des doigts (18) est disposée devant l'élément de retenue (9) pour éviter un engagement dans un mécanisme de broyage du moulin à café (3).

10. Méthode pour faire fonctionner une machine à café (1), notamment une machine à café automatique, selon l'une quelconque des revendications précédentes, le café moulu (4) étant accumulé dans le compartiment de retenue (8) au moyen de l'élément de retenue (9) dans sa position de retenue et l'élément de retenue (9) étant déplacé après cela, notamment après expiration d'une période de temps après le début d'une opération de broyage, dans la position de libération et du café moulu (4) préalablement accumulé parvenant dans la chambre de percolation (6) et un produit à base de café étant élaboré dans celle-ci au moyen du café moulu (4) par addition d'eau notamment chauffée,
**caractérisée en ce que**
l'élément de retenue (9) est déplacé de telle sorte qu'avec celui-ci, notamment après la fin de l'opération de broyage et/ou à un moment avant la fin de l'opération de broyage, du café moulu (4) est activement déversé, notamment expulsé, du compartiment de retenue (8).

11. Méthode selon la revendication 10,
**caractérisée en ce que**
la période de temps est d'au moins 1s, de préférence au moins 2 s, davantage de préférence au moins de 3 s, de façon encore plus préférée au moins de 4 s, et de façon tout particulièrement préférée au moins de 5 s.

12. Procédé selon l'une quelconque des revendications 10 ou 11,
**caractérisé en ce que**
l'élément de retenue (9) pendant la même opération de broyage se redéplace en arrière dans une position de retenue après un déplacement, notamment un pivotement, de la position de retenue à la position de libération et après une distribution de café moulu (4) préalablement accumulé, du compartiment de retenue (8) dans la chambre de percolation (6), avant la fin de l'opération de broyage et se déplace à nouveau dans une position de libération après une période de temps notamment prédéfinie ou déterminée sur la base d'un paramètre de fonctionnement.
